(19) Europäisches Patentamt
European Patent Office
Office européen des brevets

(11) **EP 3 175 256 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **15742252.8**

(22) Anmeldetag: **27.07.2015**

(51) Int Cl.:
*G01S 7/41* (2006.01)   *G01S 13/931* (2020.01)
*G01S 13/34* (2006.01)   *G01S 13/72* (2006.01)

(86) Internationale Anmeldenummer:
**PCT/EP2015/067105**

(87) Internationale Veröffentlichungsnummer:
**WO 2016/016161 (04.02.2016 Gazette 2016/05)**

(54) **VERFAHREN ZUM KLASSIFIZIEREN EINES OBJEKTES IN EINEM UMGEBUNGSBEREICH EINES KRAFTFAHRZEUGS, FAHRERASSISTENZSYSTEM UND KRAFTFAHRZEUG**

METHOD FOR CLASSIFYING AN OBJECT IN AN AREA SURROUNDING A MOTOR VEHICLE, DRIVER ASSISTANCE SYSTEM AND MOTOR VEHICLE

PROCÉDÉ DE CLASSIFICATION D'UN OBJET DANS UNE ZONE ENVIRONNANTE D'UN VÉHICULE AUTOMOBILE, SYSTÈME D'ASSISTANCE AU CONDUCTEUR ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2014 DE 102014110667**

(43) Veröffentlichungstag der Anmeldung:
**07.06.2017 Patentblatt 2017/23**

(73) Patentinhaber: **Valeo Schalter und Sensoren GmbH**
**74321 Bietigheim-Bissingen (DE)**

(72) Erfinder: **MALIK, Waqas**
**74321 Bietigheim-Bissingen (DE)**

(74) Vertreter: **Withopf, Kristina et al**
**Valeo Schalter und Sensoren GmbH**
**CDA-IP**
**Laiernstraße 12**
**74321 Bietigheim-Bissingen (DE)**

(56) Entgegenhaltungen:
DE-A1- 10 344 299    DE-A1-102011 121 560
US-B2- 7 652 617

**Beschreibung**

Die Erfindung betrifft ein Verfahren zum Klassifizieren eines Objekts in einem Umgebungsbereich eines Kraftfahrzeugs. Die Erfindung betrifft außerdem ein Fahrerassistenzsystem für ein Kraftfahrzeug, wie auch ein Kraftfahrzeug mit einem Fahrerassistenzsystem.

Verfahren zum Klassifizieren eines Objekts in einem Umgebungsbereich eines Kraftfahrzeugs sind aus dem Stand der Technik bekannt. So wird in der US 2012/0119894 A1 der Umgebungsbereich mittels eines Radarsensors und einer Kamera gleichzeitig erfasst. Um Objekte in dem Umgebungsbereich zu klassifizieren, werden Bilder der Kamera mit Referenzbildern verglichen und Daten des Radarsensors mit Referenzdaten verglichen.

Auch in der US 8314732 B2 werden ein Radarsensor und eine Videokamera angewandt. Die Radardaten des Radarsensors werden genutzt, um den Umgebungsbereich einer Vorbearbeitung zu unterziehen, bei welcher Bereiche mit Zielobjekten extrahiert werden. Die Bereiche mit den Zielobjekten werden anschließend anhand von Bildverarbeitungsverfahren und den Bildern der Kamera weiterverarbeitet.

Vorliegend gilt das Interesse einem Radarsensor, welcher unabhängig von anderen Sensoren eine Klassifizierung durchführen kann. So wird beispielsweise in der US 7652617 B2 ein FMCW (Frequency Modulation Continuous Wave)-Radarsensor eingesetzt, welcher fähig ist, Objekte zu verfolgen und zu klassifizieren. Der Radarsensor berechnet eine Fourier-Transformation von dem empfangenen Radarsignal in Range- und Dopplerrichtung, wodurch eine zweidimensionale Fourier-Transformation erhalten wird. Diese kann verwendet werden, um ein zweidimensionales Leistungsspektrum zu berechnen. Diese Leistungsspektren werden zu bestimmten Abständen von dem Objekt berechnet und werden anschließend verwendet, um die Objekte zu klassifizieren.

In der DE 10 2011 121 560 A1 wird ein Verfahren zur Detektion und Klassifikation von Objekten anhand von Radardaten offenbart, wobei aus den Radardaten eine Entfernung, eine Geschwindigkeit und/oder ein Winkel zumindest eines Objektes bezüglich eines Referenzobjektes ermittelt werden bzw. wird.

In der US 7,652,617 B2 wird weiterhin ein Verfahren zur Verbesserung eines FMCW-Radarsystems offenbart.

Es ist Aufgabe der Erfindung, ein Verfahren, ein Fahrerassistenzsystem sowie ein Kraftfahrzeug bereitzustellen, mit welchem beziehungsweise bei welchem das Objekt in dem Umgebungsbereich des Kraftfahrzeugs in seiner Art präziser erkannt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst.

Bei einem erfindungsgemäßen Verfahren wird ein Objekt in einen Umgebungsbereich eines Kraftfahrzeugs mit den folgenden Schritten klassifiziert:

a) Aussenden von Radarsignalen in den Umgebungsbereich von zumindest einem kraftfahrzeugseitigen Radarsensor und Empfangen von an dem Objekt reflektierten Radarsignalen,

b) Bereitstellen der durch die Radarsignale erhaltenen Informationen als Radardaten,

c) Erzeugen eines Leistungsspektrums abhängig von zumindest einem als Information in den Radardaten enthaltenen Entfernungswert, Geschwindigkeitswert und Intensitätswert,

d) Vergleichen von zumindest einem in dem Leistungsspektrum enthaltenen Spektrumbereich mit einem Intensitäts-Schwellwert und Auswählen des Spektrumbereichs als potentielles Objekt, falls dessen Intensität größer als der Intensitäts-Schwellwert ist,

e) Durchführen eines weiteren Zyklus mit den Schritten a) bis d),

f) Erkennen des potentiellen Objektes als tatsächliches Objekt abhängig davon, ob das potentielle Objekt sowohl in einem ersten Zyklus gemäß den Schritten a) bis d) als auch zumindest in dem zweiten Zyklus gemäß Schritt e) ausgewählt wurde,

g) Vergleichen von zumindest einem Merkmal des erkannten Objektes mit Referenzmerkmalen eines Referenzobjektes,

h) Zuweisen des Objektes zu einer bestimmten Klasse von mehreren verschiedenen Klassen abhängig von dem Vergleich gemäß Schritt g).

Es ist vorgesehen, dass als das zumindest eine Merkmal ein Intensitätsbereich des Objektes von dem Leistungsspektrum berücksichtigt wird. Erfindungsgemäß ist vorgesehen, dass der Intensitätsbereich des Objektes von dem Leistungsspektrum in Abhängigkeit eines rechteckigen Ausschnittes des Leistungsspektrums berücksichtigt wird. Der Intensitätsbereich des Objektes in dem Leistungsspektrum umfasst mehrere Spektrumbereiche. Die reflektierten Radarsignale des Objektes verteilen sich üblicherweise auf mehrere Spektrumbereiche des Leistungsspektrums. So kann dies beispielsweise auf der Entfernungs- beziehungsweise Range-Achse des Leistungsspektrums damit erklärt werden, dass von dem Objekt aufgrund von Mehrfachreflexionen auch Radarsignale reflektiert werden, welche eine höhere Laufzeit aufweisen als jene, welche ohne Umweg reflektiert worden sind. Dies führt dazu, dass das Objekt in dem Leistungsspektrum mehrere Spektrumbereiche auf der Achse des Entfernungswertes belegt. Ergänzend kann es aber auch sein, dass sich die reflektierten Radarsignale des Objektes über mehrere Spektrumbereiche in Richtung der Achse des Geschwindigkeitswertes beziehungsweise der Dopplerachse erstrecken. Dies ist beispielsweise der Fall bei einem Fußgänger, welcher seine Arme bewegt. In diesem Fall hat ein Objekt verschiedene Geschwindigkeiten. Um also möglichst alle Intensitäten des Leistungsspektrums von einem Objekt zu verwenden, wird der rechteckige Ausschnitt berücksichtigt. Vorzugsweise erstreckt sich der rechteckige Ausschnitt des Intensitätsbereichs über einen größeren Bereich des Entfernungswertes als über den Geschwindigkeitswert. Der Spektrumbereich ist zumindest ein Matrixelement des Leistungsspektrums, welches in Form einer zweidimensionalen Matrix ausgebildet ist.

Durch das erfindungsgemäße Verfahren wird es möglich, das Objekt anhand der Radardaten besonders präzise zu klassifizieren beziehungsweise einer bestimmten Klasse zuzuweisen. Die Zuweisung zu einer bestimmten Klasse ist abhängig von dem Vergleich des Merkmals des Objekts mit dem Referenzmerkmal des Referenzobjekts.

Vorzugsweise ist vorgesehen, dass in dem ersten Zyklus nach der Auswahl des potentiellen Objekts eine Bestimmung von zumindest einem den Spektrumbereich charakterisierenden Parameterwert durchgeführt und auch in dem zweiten Zyklus nach der Auswahl des potentiellen Objektes eine Bestimmung von dem zumindest einen den Spektrumbereich charakterisierenden Parameterwert durchgeführt wird und das Erkennen des potentiellen Objektes als tatsächliches Objekt gemäß Schritt f) abhängig davon erfolgt, ob die Parameterwerte zumindest innerhalb eines einen Wertebereich der Parameterwerte definierenden Abweichungsintervalls, welches insbesondere gegen Null läuft, in beiden Zyklen aufgetreten sind. Vorteilhaft ist, dass dadurch besonders präzise das potentielle Objekt als tatsächliches Objekt erkannt werden kann. Hierdurch kann auch ein Rauschen der Messungen reduziert werden. Das Ziel kann beispielsweise sein, das Objekt, insbesondere das bewegte Objekt, über mehrere Zyklen anhand des zumindest einen Parameterwerts zu verfolgen. Es wird beispielsweise davon ausgegangen, dass das tatsächliche Objekt in mindestens zwei Zyklen oder auch mehr detektiert beziehungsweise erkannt werden kann. Das potentielle Objekt wird also dementsprechend zu einem tatsächlichen Objekt beziehungsweise dem Objekt, falls eine Fehldetektion durch das Verfolgen ausgeschlossen werden kann.

In einer Ausführungsform ist vorgesehen, dass als der Parameterwert ein Entfernungswert von dem Radarsensor zum Objekt und/oder eine Relativgeschwindigkeit zwischen dem Radarsensor und dem Objekt und/oder ein Azimutwinkel von dem Radarsensor zum Objekt berücksichtigt wird. Der Entfernungswert wird auch als Range-Wert bezeichnet und gibt die Entfernung zwischen dem Radarsensor und dem Objekt an. Der Entfernungswert kann mittels einer Laufzeitmessung des Radarsignals ermittelt werden. Die Relativgeschwindigkeit gibt eine radiale Geschwindigkeit des Objekts bezüglich des Radarsensors an. Die Relativgeschwindigkeit kann anhand einer Dopplerverschiebung beziehungsweise einer Frequenzverschiebung des Radarsignals ermittelt werden.

Der Azimutwinkel bezeichnet einen Horizontalwinkel in der Ebene einer Straße des Kraftfahrzeugs beziehungsweise einer Fahrbahn des Kraftfahrzeugs. Ein Bezugspunkt des Azimutwinkels kann beispielsweise eine Längsachse des Kraftfahrzeugs sein. So kann der Azimutwinkel dermaßen bestimmt werden, dass dieser den Bereich zwischen der Längsachse des Kraftfahrzeugs und einer gedachten Linie von dem Radarsensor zu dem Objekt einschließt. Der Azimutwinkel kann beispielsweise mit zwei unterschiedlichen Empfangskanälen bestimmt werden. Hiervon wird eine Phasendifferenz berechnet, wodurch anhand einer Lookup-Tabelle, welche Referenz-Azimutwinkel enthält, der Azimutwinkel des Objekts bestimmt beziehungsweise geschätzt werden kann.

Insbesondere ist vorgesehen, dass als das zumindest eine Merkmal eine absolute Geschwindigkeit des Objekts und/oder eine absolute Beschleunigung des Objekts und/oder eine Varianz der Geschwindigkeit des Objekts und/oder eine Varianz der Beschleunigung des Objekts und/oder eine über die Zyklen kumulierte Intensität des Objekts berücksichtigt wird. Das Merkmal ist also dazu vorgesehen, das Objekt mit einem Referenzobjekt vergleichen zu können. Je ausgeprägter ein Merkmal einer bestimmten Klasse ist, desto zuverlässiger lässt sich das Objekt anhand dieses Merkmals der vorbestimmten Klasse zuweisen. Die absolute Geschwindigkeit des Objekts ist also jene Geschwindigkeit, welche das Objekt in einem erdfesten Koordinatensystem erfährt. Die absolute Geschwindigkeit des Objekts ist also unabhängig von der Geschwindigkeit des Kraftfahrzeugs. Das Gleiche gilt für die absolute Beschleunigung des Objekts. Die absolute Beschleunigung des Objekts ist ebenfalls in einem erdfesten Koordinatensystem vorgesehen und ist unabhängig von der Geschwindigkeit des Kraftfahrzeugs. Die Varianz der Geschwindigkeit beziehungsweise die Varianz der absoluten Geschwindigkeit kann gemäß Schritt f) ermittelt werden, welcher die Geschwindigkeit des Objekts über mehrere Zyklen bereitstellt. Das Gleiche gilt für die Varianz der Beschleunigung des Objekts beziehungsweise die Varianz der absoluten Beschleunigung des Objekts, welche ebenfalls gemäß Schritt f) ermittelt werden kann. Die über die Zyklen kumulierte Intensität des Objekts ist abhängig von dem an dem Objekt reflektierten Radarsignal. Es kann beispielsweise als die Höhe der Kurve des Spektrumbereichs beziehungsweise des Bins in dem Leistungsspektrum beschrieben werden. Häufig besteht ein Zusammenhang zwischen der Größe des Objekts und der Intensität des Objekts in dem Leistungsspektrum. So reflektieren große Objekte, wie beispielsweise ein Lastkraftwagen, stärker als kleine Objekte, wie beispielsweise ein Fußgänger. Ebenfalls abhängig von der Intensität der an dem Objekt reflektierten Radarsignalen ist der Intensitätsbereich des Objektes von dem Leistungsspektrum. Hierfür ist vorgesehen, dass ein bestimmter Intensitätsbereich des Leistungsspektrums, also beispielsweise mehrere Bins beziehungsweise Spektrumbereiche von dem Leistungsspektrum für das Merkmal des Intensitätsbereichs des Objekts zusammengefasst werden. Dies kann sinnvoll sein, weil sich das Objekt über mehrere Bins beziehungsweise Leistungsspektrumbereiche erstrecken kann. Dies hat zum einen mit Messgenauigkeiten zu tun, zum anderen kann ein Objekt beispielsweise unterschiedliche Relativgeschwindigkeiten aufweisen, wie ein Fußgänger, welcher die Arme bewegt. Weiterhin sind auch in einem gewissen Rahmen unterschiedliche Geschwindigkeiten des Objekts in dem Leistungsspektrum möglich. Dies kann beispielsweise auf Mehrfachreflexionen zurückzuführen sein, welche dadurch eine längere Laufzeit aufweisen.

In einer weiteren Ausführungsform ist vorgesehen, dass für die über die Zyklen kumulierte Intensität des Objektes ein Durchschnittsfilter, welcher die Intensität über die Zyklen mittelt, berücksichtigt wird. Der Durchschnittsfilter berechnet beziehungsweise mittelt die Intensität des Objektes in dem jeweiligen Spektrumbereich mit vorangegangenen Zyklen. Der Vorteil ist nun, dass somit gegen die hohe Varianz der Intensität beziehungsweise des reflektierten Radarsignals vorgegangen werden kann. So ist die Stärke des reflektierten Radarsignals in einem unverarbeiteten beziehungsweise unvorprozessierten Zustand zu stark schwankend, als dass eine Klasse zugewiesen werden könnte. So ist es beispielsweise der Fall, dass ein großes Objekt, welches die Radarsignale stark reflektiert beziehungsweise eine hohe Intensität in dem jeweiligen Spektrumbereich aufweist, von einem anderen großen Objekt verdeckt wird oder auch zeitweise verdeckt wird. Dies würde dazu führen, dass das große Objekt über ein paar Zyklen eine hohe Intensität aufweist und dann plötzlich nur noch eine geringe Intensität aufweist. Das Gleiche ist der Fall für ein kleines Objekt, welches ebenfalls durch ein großes oder in diesem Fall auch kleines Objekt zumindest zeitweise verdeckt werden kann. Um diese variierenden Intensitäten zu mitteln, kann der Durchschnittsfilter angewandt werden.

Ergänzend oder alternativ ist vorgesehen, dass das Zuweisen zu einer Klasse abhängig von der über die Zyklen kumulierten Intensität des Objektes mit zumindest einer linearen Teilung eines Merkmalsraums der über die Zyklen kumulierten Intensität durchgeführt wird. So kann beispielsweise der Merkmalsraum, welcher die über die Zyklen kumulierte Intensität des Objektes abhängig von der Entfernung darstellt, dermaßen linear, also mit geraden Linien, unterteilt werden, dass dadurch verschiedene Klassen bestimmt werden.

Insbesondere ist vorgesehen, dass durch die verschiedenen Klassen verschiedene Verkehrsteilnehmer charakterisiert werden. Dies ist vorteilhaft, weil dadurch die Objekte verschiedenen Verkehrsteilnehmern zugewiesen werden können. Es kann also beispielsweise festgestellt werden, ob das Objekt ein Mensch oder ein Fahrzeug ist. Dies kann besonders vorteilhaft sein für den Fall des autonomen Fahrens. So kann es beispielsweise eine Situation geben, in der ein Ausweichen nach links oder rechts erforderlich ist. Befindet sich nun auf der einen Seite beispielsweise ein ungeschützter Mensch und auf der anderen Seite ein geschütztes Fahrzeug, so kann abhängig davon die Entscheidung für die jeweilige Seite des Ausweichens erfolgen.

Vorzugsweise ist vorgesehen, dass als ein Verkehrsteilnehmer ein Motorrad oder ein Personenkraftwagen oder ein Lastkraftwagen oder ein Fußgänger oder ein Fahrrad berücksichtigt ist. Daher wird situationsabhängig zumindest ein derartiger Verkehrsteilnehmer berücksichtigt. Diese Klassen sind die, welche am häufigsten im Verkehr auftreten und sind deshalb vorteilhaft. Falls das Objekt keiner der zuvor genannten Klassen zugeordnet werden kann, kann es auch vorgesehen sein, dass das Objekt der Klasse "unbekannt" zugeordnet wird. Vorteilhaft daran ist also, dass eine gewisse Unsicherheit bei der Klassifikation beziehungsweise dem Zuweisen hierdurch ausgedrückt werden kann.

In einer weiteren Ausführungsform ist vorgesehen, dass abhängig von Schritt g) ein Konfidenzwert, welcher eine Zuverlässigkeit des Vergleichs beschreibt, berücksichtigt wird. Der Konfidenzwert kann beispielsweise durch ein Ähnlichkeitsmaß, welches bei dem Vergleich verwendet wird, bereitgestellt werden. Vorteilhaft daran ist, dass eine Aussage über die Verlässlichkeit der Zuweisung des Objektes zu der Klasse möglich ist. Der Konfidenzwert sagt also aus, wie sicher die Zuweisung erfolgt ist.

Eine weitere Ausführungsform sieht vor, dass das zumindest eine Merkmal gewichtet wird. Es kann beispielsweise sein, dass das Merkmal der über die Zyklen kumulierten Intensität des Objektes zuverlässiger ist als andere Merkmale. Das kann auch bedeuten, dass anhand eines der Merkmale eine qualitativere Klassifikation beziehungsweise ein qualitativ hochwertigeres Zuweisen des Objektes zu der bestimmten Klasse ermöglicht wird, weil die bestimmte Klasse durch dieses Merkmal besser beziehungsweise eindeutiger beschrieben wird. Ist dies beispielsweise im Vorfeld bekannt, also beispielsweise durch eine empirische Feststellung, so kann das entsprechenden Merkmal dementsprechend gewichtet werden.

Insbesondere ist vorgesehen, dass die Berechnung der absoluten Geschwindigkeit des Objekts beziehungsweise der absoluten Beschleunigung des Objektes abhängig von einer Geschwindigkeit des Kraftfahrzeugs beziehungsweise eine Beschleunigung des Kraftfahrzeugs ausgeführt wird. Das bedeutet, die zuvor bekannte Relativgeschwindigkeit des Objektes bezüglich des Kraftfahrzeugs kann mit der bekannten Geschwindigkeit des Kraftfahrzeugs beziehungsweise der bekannten Beschleunigung des Kraftfahrzeugs in die absolute Geschwindigkeit des Objektes beziehungsweise die absolute Beschleunigung des Objektes umgerechnet werden. Die absolute Geschwindigkeit des Objektes beziehungsweise die absolute Beschleunigung des Objektes ist ein eindeutigeres Merkmal als die Relativgeschwindigkeit des Objektes beziehungsweise die Relativbeschleunigung des Objektes und ist somit vorteilhaft bei dem Zuweisen des Objektes zu der bestimmten Klasse.

In einer weiteren Ausführungsform ist vorgesehen, dass Schritt f) auf Basis von einem Prädiktionsalgorithmus, insbesondere einem Kalman-Filter, durchgeführt wird. Ein Prädiktionsalgorithmus versucht beispielsweise in Abhängigkeit von den Radardaten der vorangegangenen Zyklen, Schätzungen über die zukünftigen Radardaten abzugeben. Der Kalman-Filter ist eine Möglichkeit, den Prädiktionsalgorithmus umzusetzen. Der Kalman-Filter ist, anders gesagt, ein Satz von Gleichungen, mit denen trotz fehlerbehafteter Messungen und verrauschten Systemzuständen der wahre Zustand eines Systems geschätzt werden kann. Alternativ hierzu lässt sich beispielsweise ein Partikelfilter anwenden. Durch den Prädiktionsalgorithmus lässt sich das potentielle Objekt besonders einfach und vorteilhaft über die einzelnen Zyklen verfolgen und ermöglicht somit das Erkennen des tatsächlichen Objektes besonders vorteilhaft. Weiterhin kann der Kalman-Filter vorteilhaft sein, weil dieser beispielsweise die Merkmale der Varianz der Geschwindigkeit und der Varianz der Beschleunigung des Objektes besonders einfach bereitstellt.

Ein erfindungsgemäßes Fahrerassistenzsystem für ein Kraftfahrzeug umfasst zumindest einen Radarsensor zum Bereitstellen von Radardaten eines Umgebungsbereichs des Kraftfahrzeugs, welches dazu ausgelegt ist, ein erfindungsgemäßes Verfahren durchzu-führen.

Ein erfindungsgemäßes Kraftfahrzeug, insbe-sondere ein Personenkraftwagen, umfasst ein erfindungsgemäßes Fahrerassistenzsystem.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Ausführungsbeispiele der Erfindung werden nachfolgend anhand schematischer Zeichnungen näher erläutert.

Dabei zeigen:

Fig. 1     in schematischer Draufsicht ein Ausführungs-beispiel eines erfindungsgemäßen Kraftfahr-zeugs mit einem Ausführungsbeispiel eines erfindungsgemäßen Fahrerassistenzsystems zum Klassifizieren eines Objekts;

Fig. 2     ein Diagramm eines ausgesendeten Radarsignals und eines empfangenen Radarsignals abhängig von Frequenz und Zeit;

Fig. 3     ein Leistungsspektrum, mit der Intensität des empfangenen Radarsignals abhängig von ei-nem Entfernungswert und einem Geschwin-digkeitswert;

Fig. 4     das Leistungsspektrum analog zu Fig. 3 mit Intensitätswerten größer als ein Intensitätsschwellwert;

Fig. 5     das Leistungsspektrum in Draufsicht mit der Ordinate als Geschwindigkeitswert und der Abszisse als Range- beziehungsweise Entfernungswert;

Fig. 6     ein teilweises Ablaufdiagramm des erfindungsgemäßen Verfahrens;

Fig. 7     ein weiteres Ablaufdiagramm des erfindungsgemäßen Verfahrens;

Fig. 8     Merkmale des erkannten Objekts mit Gewichten und ein resultierender Merkmalsvektor;

Fig. 9     ein Diagramm des Merkmals einer über die Zyklen kumulierte Intensität des Objektes; und

Fig. 10    ein Diagramm des Merkmals "Intensitätsbereich des Objektes" anhand von Trainingsdaten.

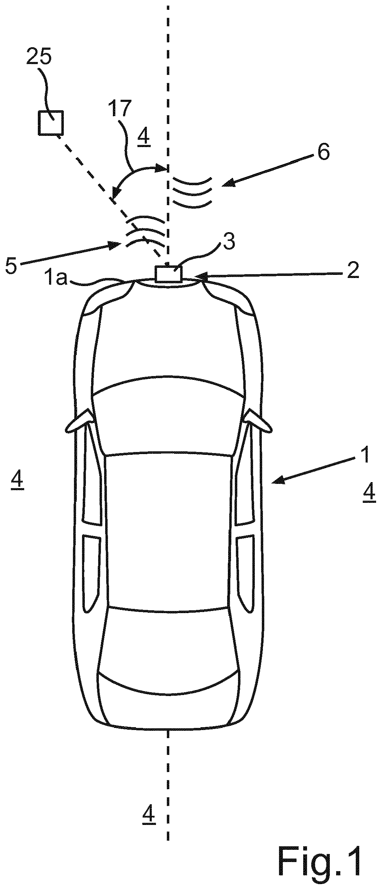

In Fig. 1 ist schematisch eine Draufsicht auf ein Kraftfahrzeug 1 mit einem Fahrerassistenzsystem 2 gemäß einer Ausführungsform der Erfindung dargestellt. Das Fahrerassistenzsystem 2 umfasst im Ausführungsbeispiel einen Radarsensor 3. Gemäß dem Ausführungsbeispiel in Fig. 1 ist der Radarsensor 3 an einer Front 1a des Kraftfahrzeugs 1 angeordnet. Die Anordnung des Radarsensors 3 ist jedoch vielfältig möglich, vorzugsweise allerdings so, dass ein Umgebungsbereich 4 des Kraftfahrzeugs 1 erfasst werden kann.

Der Radarsensor 3 ist dazu ausgelegt, Radarsignale in den Umgebungsbereich 4 auszusenden und vorzugsweise auch die an einem Objekt reflektierten Radarsignale zu empfangen. Der Radarsensor 3 ist vorzugsweise als ein LFMCW-Radar (Linear Frequency Modulation Continuous Wave-Radar) ausgelegt. Hierbei wird ein Chirp in Form einer Rampe auf das Trägersignal aufmoduliert. Das erfindungsgemäße Verfahren ist aber auch mit einem sonstigen FMCW-Radar beziehungsweise einem Frequenzmodulierten Dauerstrich-Radar ausführbar.

Vorzugsweise arbeitet das LFMCW-Radar mit einer Trägerfrequenz von 24 Gigahertz und einer Bandbreite von 200 Megahertz. Das Aufmodulieren des Chirps benötigt ungefähr 256 Mikrosekunden und deckt 200 Megahertz ab. Es sind aber auch sämtliche verfügbare andere Trägerfrequenzen und Bandbreiten zur Verwendung des erfindungsgemäßen Verfahrens möglich.

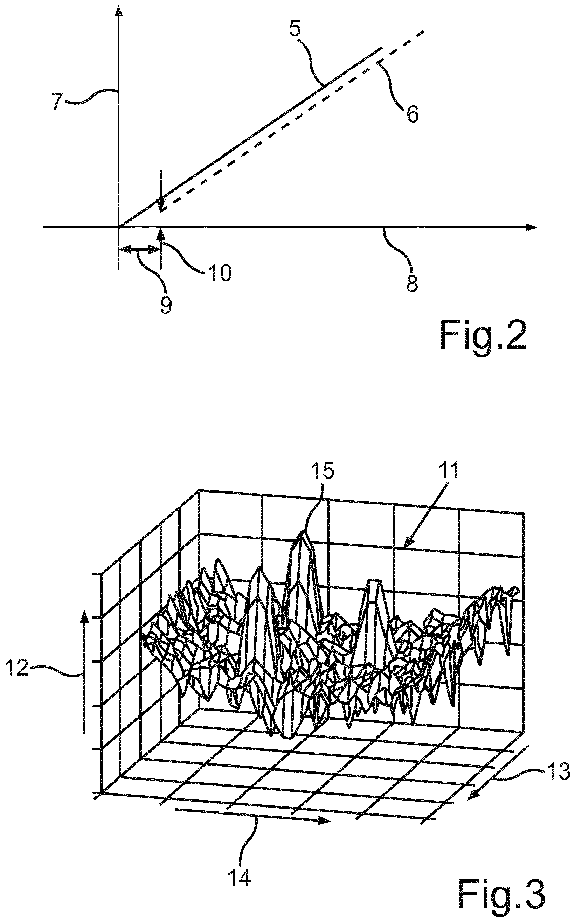

Fig. 2 zeigt ein ausgesendetes Radarsignal 5 und ein empfangenes Radarsignal 6. Beide Radarsignale 5, 6 sind abhängig von einer Frequenz 7 und einer Zeit 8 beschrieben. Weiterhin ist ein Zeitversatz 9 angegeben, welcher eine Laufzeit zwischen Aussenden 5 und Empfangen 6 des Radarsignals angibt und eine Frequenzverschiebung 10 beziehungsweise ein Doppler-Shift, welcher eine Änderung der Frequenz des ausgesandten Radarsignals 5 aufgrund der Reflexion an einem bewegten Objekt, insbesondere ein in radialer Richtung zu dem Radarsensor 3 bewegtes Objekt, angibt.

Fig. 3 zeigt nun ein Leistungsspektrum 11, welches mittels einer Fast-Fourier-Transformation (FFT) anhand von mehreren Chirps erstellt werden kann. Vorzugsweise wird das Leistungsspektrum 11 für jeden Zyklus, welcher beispielsweise 70 Millisekunden dauert, erstellt. Das Leistungsspektrum 11 visualisiert die Intensität beziehungsweise die Stärke des von dem Objekt reflektierten Radarsignals in Abhängigkeit von einem Entfernungswert 13 beziehungsweise einem Range-Wert und einem Geschwindigkeitswert 14 beziehungsweise einem Dopplerwert. Das Leistungsspektrum 11 ist in Spektrumbereiche 15 unterteilt. Der Spektrumbereich 15 steht somit für ein Element der Matrix, welche das Leistungsspektrum 11 beschreibt. Der Spektrumbereich 15 ist also ein diskreter Intensitätswert 12 mit einem Entfernungswert 13 und einem Geschwindigkeitswert 14.

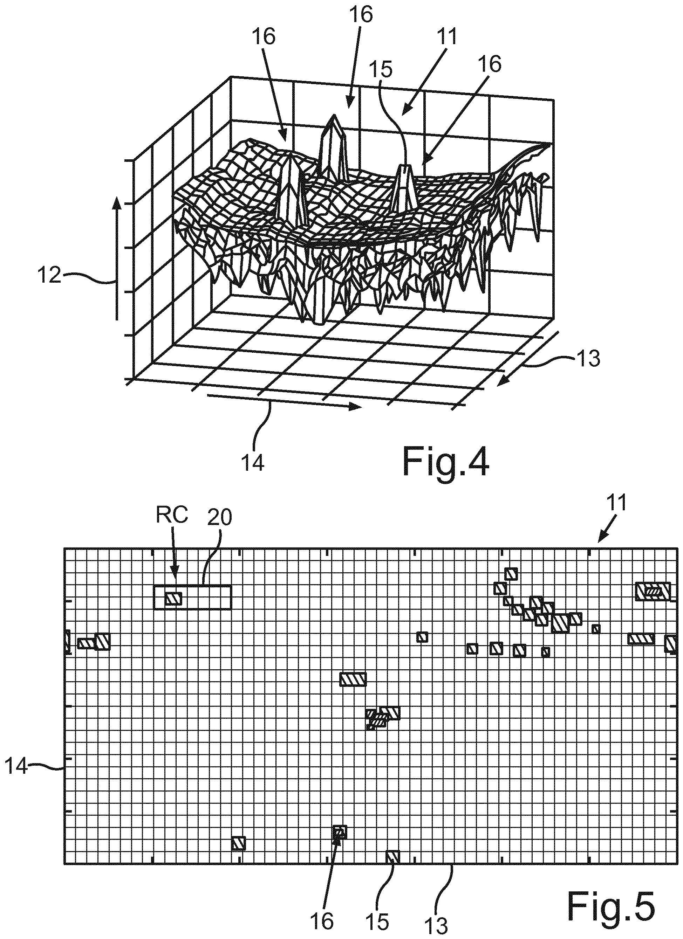

Fig. 4 zeigt das Leistungsspektrum 11, bei welchem die Spektrumbereiche 15 jeweils mit einem Intensitätsschwellwert verglichen worden sind und die Spektrumbereiche 15, welche eine Intensität 12 größer als der Intensitätsschwellwert aufweisen, für ein potentielles Objekt 16 stehen.

Fig. 5 zeigt das Leistungsspektrum 11 in einer zweidimensionalen Ansicht beziehungsweise Draufsicht. Die Ordinate ist der Geschwindigkeitswert 14, während die Abszisse der Entfernungswert 13 ist. In Zusammenschau von Fig. 3 bis Fig. 5 wird somit gezeigt, dass sich ein potentielles Objekt 16 über mehrere der Spektrumbereiche 15 erstreckt beziehungsweise erstrecken kann. Der Grund ist, dass das Objekt verschiedene Geschwindigkeiten beziehungsweise Relativgeschwindigkeiten aufweisen kann oder dass das Objekt nicht eindeutig einer Entfernung beziehungsweise einem der Entfernungswerte 13 zugewiesen werden kann. Das Objekt kann beispielsweise verschiedene Geschwindigkeiten aufweisen, falls das Objekt ein Fußgänger ist, welcher beispielsweise seine Arme bewegt. Die Unschärfe bei der Bestimmung des Entfernungswertes 13 können beispielsweise mit Verzögerungen in der Laufzeit des Radarsignals erklärt werden, welche beispielsweise durch Mehrfachreflexionen des Radarsignals entstehen. Weiterhin kann die Auflösung des Entfernungswertes 13 von dem Radarsensor 3 abhängen.

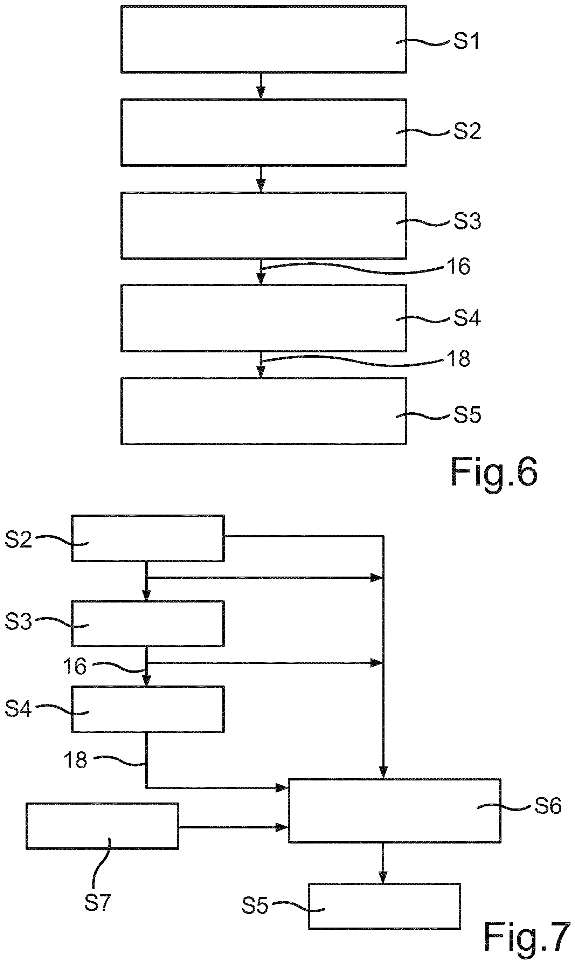

Fig. 6 zeigt ein Ablaufdiagramm, welches das erfindungsgemäße Verfahren in spezifischen Schritten beschreibt. In einem Schritt S1 wird der Chirp auf das Radarsignal aufmoduliert, das Radarsignal wird ausgesendet und in einem weiteren Schritt S2 empfangen. In dem Schritt S2 werden die Komponenten der Frequenzverschiebung 10 und des Zeitversatzes 9 bestimmt, womit unter Beteiligung der Intensität 12 das Leistungsspektrum 11 bereitgestellt werden kann. Das Leistungsspektrum 11 wird für jeden Zyklus bereitgestellt. Anschließend wird in einem Schritt S3 für jedes potentielle Objekt 16 in dem Leistungsspektrum 11 der Entfernungswert 13, der Geschwindigkeitswert 14 und ein Azimutwinkel 17 bestimmt. Der Entfernungswert 13, der Geschwindigkeitswert 14 und der Azimutwinkel 17 sind in diesem Fall die Parameterwerte. Anhand der Parameterwerte 13, 14, 17 wird das potentielle Objekt 16 über mehrere Zyklen, also mehrere Leistungsspektren 11, in einem Schritt S4 verfolgt. Ist das potentielle Objekt 16 in dem Schritt S4 verfolgbar gewesen, so kann davon ausgegangen werden, dass es sich um ein tatsächliches Objekt 18 handelt. Das tatsächliche Objekt 18 wird in einem weiteren Schritt S5 anhand von Merkmalen $V_{abs}$, $A_{abs}$, $\sigma^2 V$, $\sigma^2 A$, y, RC mit Referenzmerkmalen $V_{abs}$, $A_{abs}$, $\sigma^2 V$, $\sigma^2 A$, y, RC eines Referenzobjektes verglichen. Abhängig von dem Vergleich kann das Objekt einer vorbestimmten Klasse zugewiesen werden. Abschließend kann dann auf Basis dieser Information ein Warnsignal, beispielsweise für ein RPC (Rear Pre-Crash)-System ausgegeben werden. Durch das Verfahren kann insbesondere durch Schritt S4 sichergestellt werden, dass die Klassifikation nur für das tatsächliche Objekt 18 und nicht das potentielle Objekt 16 ausgeführt wird.

Fig. 7 zeigt ein weiteres Ablaufdiagramm des erfindungsgemäßen Verfahrens, wobei die Schritte S2, S3, S4 analog zu Fig. 5 ablaufen. Ein Schritt S6 ist zur Veranschaulichung der Klassifikation beziehungsweise der Zuordnung eingefügt. Wie zuvor in Fig. 5 werden hier die Merkmale $V_{abs}$, $A_{abs}$, $\sigma^2 V$, $\sigma^2 A$, y, RC des erkannten Objekts 18 mit den Referenzmerkmalen $V_{abs}$, $A_{abs}$, $\sigma^2 V$, $\sigma^2 A$, y, RC des Referenzobjekts verglichen. Die Merkmale $V_{abs}$, $A_{abs}$, $\sigma^2 V$, $\sigma^2 A$, y, RC sind beispielsweise eine absolute Geschwindigkeit $V_{abs}$ des Objektes 18, eine absolute Beschleunigung $A_{abs}$ des Objektes 18, eine Varianz der Geschwindigkeit $\sigma^2 V$ des Objektes 18, eine Varianz der Beschleunigung $\sigma^2 A$ des Objektes 18, eine über die Zyklen kumulierte Intensität y des Objektes 18 und ein Intensitätsbereich RC des Objektes 18 von dem Leistungsspektrum 11. Die absolute Geschwindigkeit $V_{abs}$ des Objektes 18 und die absolute Beschleunigung $A_{abs}$ des Objektes 18 können beispielsweise mit der Geschwindigkeit des Kraftfahrzeugs 1 und der Beschleunigung des Kraftfahrzeugs 1, welche in Schritt S7 bereitgestellt werden, ermittelt werden. Die Varianz der Geschwindigkeit $\sigma^2 V$ und die Varianz der Beschleunigung $\sigma^2 A$ können beispielsweise von einem für das Verfolgen in dem Schritt S4 verwendeten Prädiktionsalgorithmus, beispielsweise einem Kalman-Filter, bereitgestellt werden. Die verbleibenden Merkmale y, RC werden anschließend anhand von Grafiken beschrieben. Fig. 7 zeigt nach dem Schritt S6 ebenfalls den Schritt S5, welcher das Warnsignal nach der erfolgten Klassifikation ausgibt. Das Warnsignal kann an einen Fahrer des Kraftfahrzeugs ausgegeben werden, und zwar visuell und/oder akustisch und/oder haptisch, es kann aber ergänzend oder alternativ auch als Steuersignal an das Kraftfahrzeug 1 ausgegeben werden.

Die Klassifikation, wie sie in dem Schritt S6 durchgeführt wird, weist das Objekt 18 zu einer bestimmten Klasse von mehreren verschiedenen Klassen zu. Die verschiedenen Klassen charakterisieren vorzugsweise verschiedene Verkehrsteilnehmer. Diese Verkehrsteilnehmer können beispielsweise ein Motorrad und/oder ein Personenkraftwagen und/oder ein Lastkraftwagen und/oder ein Fußgänger und/oder ein Fahrrad sein. Ergänzend oder alternativ kann auch ein unbekanntes Objekt als eine der vorbestimmten Klassen vorgesehen sein. Das unbekannte Objekt kann in unsicheren beziehungsweise unklaren Fällen als die Klasse gewählt werden. In einer besonderen Ausführungsform kann es auch vorgesehen sein, dass Verkehrszeichen oder Brücken klassifiziert werden.

Für die Klassifikation kann beispielsweise die absolute Geschwindigkeit $V_{abs}$ verwendet werden, weil größere Objekte 18, wie beispielsweise Lastkraftwagen, üblicherweise nicht mit hohen Geschwindigkeiten fahren. Die Objekte 18 können also beispielsweise mit dem Merkmal der absoluten Geschwindigkeit $V_{abs}$ zu einer Klasse zugewiesen werden. Die absolute Geschwindigkeit $V_{abs}$ berechnet sich wie folgt:

$$V_{abs} = V_{Kraftfahrzeug} - V_{Objekt}$$

falls ($V_{abs}$ > Grenzwert) dann folgt Objekt 18 ≠ Lastkraftwagen
$V_{Kraftfahrzeug}$ ist die Geschwindigkeit des Kraftfahrzeugs 1 und $V_{Objekt}$ ist die Geschwindigkeit des Objekts 18 relativ zum Kraftfahrzeug 1.

Analog dazu kann die absolute Beschleunigung $A_{abs}$ verwendet werden als Merkmal, um das Objekt 18 zu einer bestimmten Klasse zuzuweisen. Die absolute Beschleunigung $A_{abs}$ berechnet sich wie folgt:

$$A_{abs} = A_{Kraftfahrzeug} - A_{Objekt}$$

falls ($A_{abs}$ > Grenzwert) dann folgt Objekt 18 ≠ Lastkraftwagen

Der jeweilige Grenzwert kann anhand von Trainingsdaten in einem Trainingsprozess bestimmt werden.

Für die Schätzung der Varianz der Geschwindigkeit $\sigma^2V$ und der Varianz der Beschleunigung $\sigma^2A$ werden folgende mathematische Zusammenhänge beispielsweise angenommen:

$$\sigma^2 V = \frac{1}{n} \sum_{i=1}^{n} (V_{abs,i} - V_{mean})^2 \, ,$$

wobei $V_{abs}$ die absolute Geschwindigkeit $V_{abs}$ ist. i bezeichnet den jeweiligen Zyklus, und n bezeichnet die maximale Anzahl der Zyklen. $V_{mean}$ ist das arithmetische

Mittel von allen absoluten Geschwindigkeiten $V_{abs}$ über alle Zyklen.

$$\sigma^2 A = \frac{1}{n} \sum_{i=1}^{n} (A_{abs,i} - A_{mean})^2 \, ,$$

wobei $A_{abs}$ für die absolute Beschleunigung $A_{abs}$ steht und $A_{mean}$ für die Durchschnittsbeschleunigung über alle Zyklen. Auch für die Varianz der Geschwindigkeit $\sigma^2V$ und die Varianz der Beschleunigung $\sigma^2A$ gibt es jeweils einen Grenzwert.

Falls ($\sigma^2V$ > Grenzwert) dann folgt Objekt 18 ≠ Lastkraftwagen
oder
Falls ($\sigma^2A$ > Grenzwert) dann folgt Objekt 18 ≠ Lastkraftwagen

In diesen Fällen wird also immer davon ausgegangen, dass das Objekt 18 eine andere Klasse als Lastkraftwagen ist, weil die absolute Geschwindigkeit $V_{abs}$ und/oder die absolute Beschleunigung $A_{abs}$ und/oder die Varianz der Geschwindigkeit $\sigma^2V$ und/oder die Varianz der Beschleunigung $\sigma^2A$ über einem aus Trainingsdaten bekannten üblichen Wert, dem Grenzwert, für Lastkraftwagen liegt.

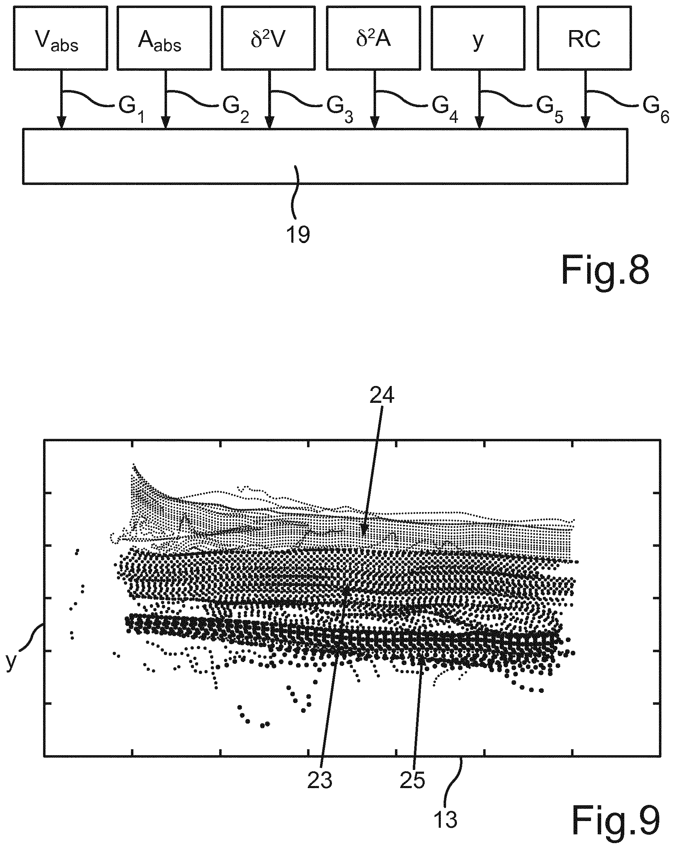

Fig. 8 zeigt, wie der Merkmalsvektor 19 anhand von der absoluten Geschwindigkeit $V_{abs}$, der absoluten Beschleunigung $A_{abs}$, der Varianz der Geschwindigkeit $\sigma^2V$, der Varianz der Beschleunigung $\sigma^2A$ der über die Zyklen kumulierten Intensität y des Objektes 18 und des Intensitätsbereichs RC bestimmt wird. Jedes dieser Merkmale $V_{abs}$, $A_{abs}$, $\sigma^2V$, $\sigma^2A$, y, RC kann zusätzlich mit einem Gewicht $G_1$ bis $G_6$ gewichtet werden.

Fig. 9 beschreibt das Merkmal der über die Zyklen kumulierten Intensität y. Die kumulierte, mit dem Durchschnittsfilter berechnete Intensität eines Objektes 18 beziehungsweise eines Spektrumbereichs 15 ist auf der Ordinate eingetragen, während der Entfernungswert 13 des korrespondierenden Spektrumbereichs 15 auf der Abszisse eingetragen ist. Unterschieden wird vorliegend zwischen drei Klassen, zu welchen das Objekt 18 zugewiesen wird. Diese Klassen können beispielsweise linear, also mit geraden Linien, voneinander separiert werden. Die Klasse mit dem höchsten y-Wert ist beispielsweise vorliegend ein Lastkraftwagen, die Klasse mit dem kleinsten y-Wert ist ein Motorrad, und die Klasse zwischen den beiden anderen Klassen ist ein Kraftwagen.

Die über die Zyklen kumulierte Intensität y berechnet sich folgendermaßen. Zusätzlich ist in der Berechnung der Durchschnittsfilter enthalten, welcher die Intensität aus den vorherigen Zyklen berücksichtigt.

$$y(n) = \alpha x(n) + \beta y(n-1),$$

n ist der jeweilige Zyklus, und x ist die Intensität 12 beziehungsweise die Stärke des an dem Objekt 18 reflektierten Radarsignals. Mit $\alpha = 1/m$ und $\beta = 1-1/m$. Wobei m die Anzahl der Zyklen für den ersten Zyklus ist. Für die Berechnung von y wird m auf 1 gesetzt. m erhöht sich dann mit jedem weiteren Zyklus um 1.

Das Merkmal des Intensitätsbereichs RC des Objektes 18 wird abhängig von dem Leistungsspektrum 11 erzeugt. Hierzu wird über das Leistungsspektrum 11 ein rechteckiges Fenster beziehungsweise ein rechteckiger Intensitätsbereich ausgewählt.

Generell, kann der ausgewählte Intensitätsbereich jedoch eine beliebig andere Form oder Größe aufweisen. Weiterhin werden nun alle Spektrumbereiche 15 beziehungsweise Bins innerhalb des rechteckigen Ausschnitts 20 gezählt, welche über einem vorbestimmten Intensitätsschwellwert liegen. Der Intensitätsschwellwert kann beispielsweise 20 dB betragen. Das Merkmal des Intensitätsbereichs RC des Objektes 18 ist also somit eine ganze Zahl beziehungsweise ein Integer-Wert für jedes Objekt 18 in dem Leistungsspektrum 11. Für das Leistungsspektrum 11 des nächsten Zyklus wird ein neuer Wert für das Merkmal des Intensitätsbereichs RC des Objekts 18 bestimmt. Das Merkmal des Intensitätsbereichs RC des Objekts 18 kann auch als Range-Counter bezeichnet werden.

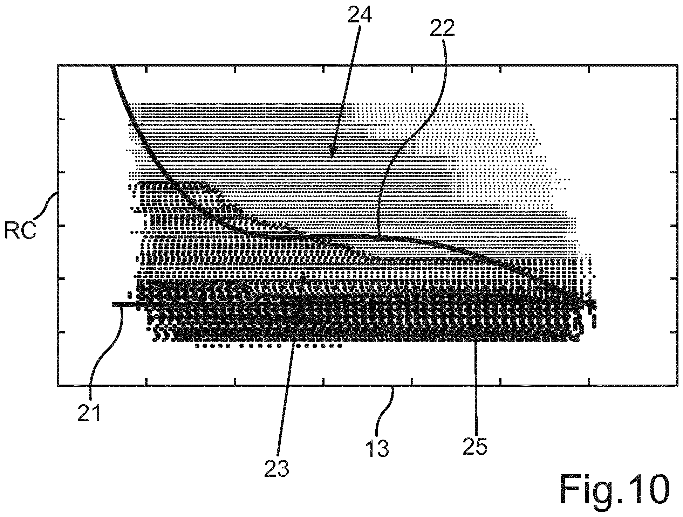

Fig. 10 zeigt eine Darstellung von dem Merkmal des Intensitätsbereichs RC des Objekts 18 anhand von einer Mehrzahl von Referenzobjekten. So ist schematisch gezeigt, wie beispielsweise die Klasse Motorrad 25 im unteren Bereich des Diagramms, welche sich im Wesentlichen von 0 bis 10 auf der Ordinate beziehungsweise des Wertes des Intensitätsbereichs RC des Objekts 18 erstreckt, von der darüberliegenden Klasse, welche vorliegend Personenkraftwagen beschreibt, trennt. Die Trennung zwischen der Klasse Motorrad 25 und der Klasse Personenkraftwagen 23 ist mittels einer Trennlinie 21 visualisiert. Weiterhin ist die Trennung von der Klasse Personenkraftwagen 23 und der Klasse Lastkraftwagen 24 mittels einer zweiten Trennlinie 22 beschrieben. Die Abszisse in Fig. 10 beschreibt den Entfernungswert 13.

Die Abmessungen des rechteckigen Ausschnitts 20 können beispielsweise drei der Spektrumbereiche 15 und 20 der Entfernungswerte 13 betragen. Es ist jedoch auch eine andere Abmessung des rechteckigen Ausschnitts 20 möglich.

Weiterhin ist vorgesehen, dass abhängig von dem Merkmalsvektor 19 ein Konfidenzwert, welcher eine Aussage über die Zuverlässigkeit der Klassifikation zulässt, bereitgestellt werden kann. So kann die Klasse beispielsweise abhängig von dem höchsten Wert des jeweiligen Merkmals $V_{abs}$, $A_{abs}$, $\sigma^2 V$, $\sigma^2 A$, y, RC in dem Merkmalsvektor 19 zugewiesen werden. Falls ein Merkmal $V_{abs}$, $A_{abs}$, $\sigma^2 V$, $\sigma^2 A$, y, RC des Merkmalsvektors 19 beispielsweise signifikant höher ist als die anderen Merkmale $V_{abs}$, $A_{abs}$, $\sigma^2 V$, $\sigma^2 A$, y, RC des Merkmalsvektors 19, so kann beispielsweise von einer sehr zuverlässigen Klassifikation ausgegangen werden. Andererseits, falls die Ergebnisse von dem Vergleich der Merkmale $V_{abs}$, $A_{abs}$, $\sigma^2 V$, $\sigma^2 A$, y, RC mit den Referenzmerkmalen $V_{abs}$, $A_{abs}$, $\sigma^2 V$, $\sigma^2 A$, y, RC für alle Merkmale $V_{abs}$, $A_{abs}$, $\sigma^2 V$, $\sigma^2 A$, y, RC des Merkmalsvektors 19 nahe beisammen liegen, so kann beispielsweise von einer niedrigen Zuverlässigkeit der Klassifikation ausgegangen werden.

Der Merkmalsvektor 19 kann beispielsweise als Array realisiert werden, wobei jeder Index beziehungsweise jedes Element des Merkmalsvektors 19 für eine bestimmte Klasse gedacht ist. Der Wert, welcher in diesem Index hinterlegt ist, beschreibt, wie oft das Ergebnis des Merkmals $V_{abs}$, $A_{abs}$, $\sigma^2 V$, $\sigma^2 A$, y, RC diese Klasse beschrieben hat. Das bedeutet, jedes Mal, wenn ein Merkmal $V_{abs}$, $A_{abs}$, $\sigma^2 V$, $\sigma^2 A$, y, RC eine bestimmte Klasse beschrieben hat, wird der Zähler dementsprechend erhöht. In einer besonderen Ausführungsform wird der Zähler abhängig von dem Gewicht G erhöht. So kann ein Ergebnis, welches durch den Merkmalsvektor 19 beschrieben wird, beispielsweise wie folgt aussehen.

$$\text{Vektor} = \begin{bmatrix} 4 \\ 0 \\ 0 \\ 0 \end{bmatrix} \begin{matrix} \textit{Lastkraftwagen} \\ \textit{Personenkraftwagen} \\ \textit{Motorrad} \\ \textit{Fußgänger} \end{matrix}$$

Vorliegend wurde also viermal für Lastkraftwagen, also Klasse Lastkraftwagen 24 gestimmt. In einer weiteren Ausführungsform kann beispielsweise eine Mindestanzahl von Zyklen erforderlich sein, um eine zuverlässige Zuweisung zu einer Klasse zu erhalten. So kann beispielsweise davon ausgegangen werden, dass mindestens fünf Zyklen notwendig sind, um eine zuverlässige Aussage über die Zuweisung zu der bestimmten Klasse treffen zu können. So kann ein weiterer Merkmalsvektor 19 beispielsweise folgendermaßen aussehen.

$$\text{Vektor} = \begin{bmatrix} 7 \\ 2 \\ 1 \\ 0 \end{bmatrix} \begin{matrix} \textit{Lastkraftwagen} \\ \textit{Personenkraftwagen} \\ \textit{Motorrad} \\ \textit{Fußgänger} \end{matrix}$$

In diesem Fall liegen mehr als fünf Zyklen vor, und das Ergebnis kann als zuverlässig angenommen werden. Hier kann beispielsweise davon ausgegangen werden, dass die Wahrscheinlichkeit für Lastkraftwagen beziehungsweise die Klasse Lastkraftwagen 24 bei 70 Prozent liegt, während die Wahrscheinlichkeit für die Klasse Personenkraftwagen 23 bei 20 Prozent liegt und die Klasse Motorrad 25 nur mit 10 Prozent in Frage kommt.

**Patentansprüche**

1. Verfahren zum Klassifizieren eines Objektes (18) in einem Umgebungsbereich (4) eines Kraftfahrzeuges (1) mit den Schritten:

    a) Aussenden von Radarsignalen (5) in den Umgebungsbereich (4) von zumindest einem kraftfahrzeugseitigen Radarsensor (3) und Empfangen von an dem Objekt (18) reflektierten Radarsignalen (6),
    b) Bereitstellen der durch die Radarsignale (5, 6) erhaltenen Informationen als Radardaten,
    c) Erzeugen eines Leistungsspektrums (11) abhängig von zumindest einem als Information in den Radardaten enthaltenen Entfernungswert (13), Geschwindigkeitswert (14) und Intensitätswert (12),
    d) Vergleichen von zumindest einem in dem Leistungsspektrum (11) enthaltenen Spektrumbereich (15) mit einem Intensitäts-Schwellwert und auswählen des Spektrumbereichs (15) als potentielles Objekt (16), falls dessen Intensität (12) größer als der Intensitäts-Schwellwert ist,
    e) Durchführen eines weiteren Zyklus mit den Schritten a) bis d),
    f) Erkennen des potentiellen Objektes (16) als tatsächliches Objekt (18) abhängig davon, ob das potentielle Objekt (16) sowohl in einem ersten Zyklus gemäß den Schritten a) bis d) als auch zumindest in dem zweiten Zyklus gemäß Schritt e) ausgewählt wurde,
    g) Vergleichen von zumindest einem Merkmal ($V_{abs}$, $A_{abs}$, $\sigma^2 V$, $\sigma^2 A$, y, RC) des erkannten Objektes (18) mit Referenzmerkmalen ($V_{abs}$, $A_{abs}$, $\sigma^2 V$, $\sigma^2 A$, y, RC) eines Referenzobjektes,
    h) Zuweisen des Objektes (18) zu einer bestimmten Klasse (23, 24, 25) von mehreren verschiedenen Klassen (23, 24, 25) abhängig von dem Vergleich gemäß Schritt g)

    **dadurch gekennzeichnet, dass**
    als das zumindest eine Merkmal des erkannten Objektes (18) ein Intensitätsbereich (RC) des Objektes (18) von dem Leistungsspektrum (11) berücksichtigt wird, wobei der Intensitätsbereich (RC) des Objektes (18) in dem Leistungsspektrum (11) mehrere Spektrumbereiche (15) umfasst und wobei der Intensitätsbereich (RC) des Objektes (18) von dem Leistungsspektrum (11) in Abhängigkeit eines rechteckigen Ausschnittes (20) des Leistungsspektrums (11) berücksichtigt wird, wobei sich die reflektierten Radarsignale (5,6) des Objektes (18) auf mehrere Spektrumbereiche (15) des Leistungsspektrums (11) verteilen und sich über mehrere Spektrumbereiche (15) in Richtung einer Achse des Entfernungswertes (13) und über mehrere Spektrumbereiche (15) in Richtung einer Achse des Geschwindigkeitswertes (14) erstrecken.

2. Verfahren nach Anspruch 1,
   **dadurch gekennzeichnet, dass**
   in dem ersten Zyklus nach der Auswahl des potentiellen Objektes (16) eine Bestimmung von zumindest einem den Spektrumbereich (15) charakterisierenden Parameterwert (13, 14, 17) durchgeführt und auch in dem zweiten Zyklus nach der Auswahl des potentiellen Objektes (16) eine Bestimmung von dem zumindest einen den Spektrumbereich (15) charakterisierenden Parameterwert (13, 14, 17) durchgeführt wird und das Erkennen des potentiellen Objektes (16) als tatsächliches Objekt (18) gemäß Schritt f) abhängig davon erfolgt, ob die Parameterwerte (13, 14, 17) zumindest innerhalb eines einen Wertebereich der Parameterwerte definierenden Abweichungsintervalls in beiden Zyklen aufgetreten sind.

3. Verfahren nach Anspruch 2,
   **dadurch gekennzeichnet, dass**
   als der Parameterwert (13, 14, 17) ein Entfernungswert (13) von dem Radarsensor (3) zum Objekt (16) und/oder eine Relativgeschwindigkeit (14) zwischen dem Radarsensor (3) und dem Objekt (16) und/oder ein Azimutwinkel (17) von dem Radarsensor (3) zum Objekt (16) berücksichtigt wird.

4. Verfahren nach einem der vorhergehenden Ansprüche,
   **dadurch gekennzeichnet, dass**
   als das zumindest eine Merkmal ($V_{abs}$, $A_{abs}$, $\sigma^2 V$, $\sigma^2 A$, y, RC) eine absolute Geschwindigkeit ($V_{abs}$) des Objektes (18) und/oder eine absolute Beschleunigung ($A_{abs}$) des Objektes (18) und/oder eine Varianz der Geschwindigkeit ($\sigma^2 V$) des Objektes (18) und/oder eine Varianz der Beschleunigung $\sigma^2 A$) des Objektes (18) und/oder eine über die Zyklen kumulierte Intensität (y) des Objektes (18) berücksichtigt wird.

5. Verfahren nach einem der Anspruch 4,
   **dadurch gekennzeichnet, dass**
   die Berechnung der absoluten Geschwindigkeit ($V_{abs}$) des Objekts (18) bzw. der absoluten Beschleunigung ($A_{abs}$) des Objektes (18) abhängig von einer Geschwindigkeit des Kraftfahrzeuges (1) bzw. eine Beschleunigung des Kraftfahrzeuges (1) ausgeführt wird.

6. Verfahren nach Anspruch 4,
   **dadurch gekennzeichnet, dass**
   für die über die Zyklen kumulierte Intensität (y) des Objektes (18) ein Durchschnittsfilter, welcher die Intensität (12) über die Zyklen mittelt, berücksichtigt wird.

**7.** Verfahren nach Anspruch 4 bis 6,
**dadurch gekennzeichnet, dass**
das Zuweisen zu einer Klasse (23, 24, 25) abhängig von der über die Zyklen kumulierten Intensität (y) des Objektes (18) mit zumindest einer linearen Teilung eines Merkmalsraumes der über die Zyklen kumulierten Intensität (y) durchgeführt wird.

**8.** Verfahren nach einem der vorhergehenden Ansprüche,
**dadurch gekennzeichnet, dass**
durch die verschiedenen Klassen (23, 24, 25) verschiedene Verkehrsteilnehmer charakterisiert werden.

**9.** Verfahren nach Anspruch 8,
**dadurch gekennzeichnet, dass**
als ein Verkehrsteilnehmer ein Motorrad und/oder ein Personenkraftwagen und/oder ein Lastkraftwagen und/oder ein Fußgänger und/oder ein Fahrrad berücksichtigt wird.

**10.** Verfahren nach einem der vorhergehenden Ansprüche,
**dadurch gekennzeichnet, dass**
abhängig von Schritt g) ein Konfidenzwert, welcher eine Zuverlässigkeit des Vergleichs beschreibt, berücksichtigt wird.

**11.** Verfahren nach einem der vorhergehenden Ansprüche,
**dadurch gekennzeichnet, dass**
das zumindest eine Merkmal ($V_{abs}$, $A_{abs}$, $\sigma^2V$, $\sigma^2A$, y, RC) gewichtet wird.

**12.** Verfahren nach einem der vorhergehenden Ansprüche,
**dadurch gekennzeichnet, dass**
Schritt f) mit einem Prädiktionsalgorithmus, insbesondere einem Kalmanfilter durchgeführt wird.

**13.** Fahrerassistenzsystem (2) mit zumindest einem Radarsensor (3) zum Bereitstellen von Radardaten eines Umgebungsbereichs (4) eines Kraftfahrzeugs (1), wobei das Fahrerassistenzsystem dazu ausgelegt ist ein Verfahren nach einem der vorhergehenden Ansprüche durchzuführen.

**14.** Kraftfahrzeug (1) mit einem Fahrerassistenzsystem (2) nach Anspruch 13.


**Claims**

**1.** Method for classifying an object (18) in an area (4) surrounding a motor vehicle (1), comprising the steps:

a) emitting radar signals (5) into the surrounding area (4) from at least one motor-vehicle-side radar sensor (3) and receiving radar signals (6) reflected at the object (18),
b) making available the information obtained by means of the radar signals (5, 6) as radar data,
c) generating a power spectrum (11) as a function of at least one distance value (13), speed value (14) and intensity value (12) which are contained as information in the radar data,
d) comparing at least one spectrum range (15), contained in the power spectrum (11), with an intensity threshold value, and selecting the spectrum range (15) as a potential object (16) if its intensity (12) is higher than the intensity threshold value,
e) carrying out a further cycle comprising the steps a) to d),
f) detecting the potential object (16) as an actual object (18) as a function of whether the potential object (16) has been selected both in a first cycle according to steps a) to d) and at least in the second cycle according to step e),
g) comparing at least one feature $A_{abs}$, $\sigma^2V$, $\sigma^2A$, y, RC) of the detected object (18) with reference features ($V_{abs}$, $A_{abs}$, $\sigma^2V$, $\sigma^2A$, y, RC) of a reference object,
h) assigning the object (18) to a specific class (23, 24, 25) of a plurality of different classes (23, 24, 25) as a function of the comparison according to step g)

**characterized in that**
an intensity range (RC) of the object (18) of the power spectrum (11) is taken into account as the at least one feature of the detected object (18), wherein the intensity range (RC) of the object (18) in the power spectrum (11) comprises a plurality of spectrum ranges (15), and wherein the intensity range (RC) of the object (18) of the power spectrum (11) is taken into account as a function of a rectangular excerpt (20) of the power spectrum (11), wherein the reflected radar signals (5, 6) of the object (18) are distributed among a plurality of spectrum ranges (15) of the power spectrum (11) and extend over a plurality of spectrum ranges (15) in the direction of an axis of the distance value (13) and over a plurality of spectrum ranges (15) in the direction of an axis of the speed value (14).

**2.** Method according to Claim 1,
**characterized in that**
in the first cycle after the selection of the potential object (16) at least one parameter value (13, 14, 17) which characterizes the spectrum range (15) is determined, and the at least one parameter value (13, 14, 17) which characterizes the spectrum range (15) is also determined in the second cycle after the selection of the potential object (16), and the detection of the potential object (16) as an actual object (18) according to step f) is carried out as a function of whether the parameter values (13, 14, 17) have occurred at least within a deviation interval, defining a value range of the parameter values, in both cycles.

3. Method according to Claim 2,
   **characterized in that**
   a distance value (13) of the radar sensor (3) from the object (16) and/or a relative speed (14) between the radar sensor (3) and the object (16) and/or an azimuth angle (17) of the radar sensor (3) with respect to the object (16) are/is taken into account as the parameter value (13, 14, 17).

4. Method according to one of the preceding claims,
   **characterized in that**
   an absolute speed ($V_{abs}$) of the object (18) and/or an absolute acceleration ($A_{abs}$) of the object (18) and/or a variance of the speed ($\sigma^2 V$) of the object (18) and/or a variance of the acceleration ($\sigma^2 A$) of the object (18) and/or an intensity (y), accumulated over the cycles, of the object (18) are/is taken into account as the at least one feature ($V_{abs}$, $A_{abs}$, $\sigma^2 V$, $\sigma^2 A$, y, RC).

5. Method according to one of the Claim 4,
   **characterized in that**
   the calculation of the absolute speed ($V_{abs}$) of the object (18) or the absolute acceleration ($A_{abs}$) of the object (18) is carried out as a function of a speed of the motor vehicle (1) or an acceleration of the motor vehicle (1).

6. Method according to Claim 4,
   **characterized in that**
   an average filter which averages the intensity (12) over the cycles is taken into account for the intensity (y), accumulated over the cycles, of the object (18).

7. Method according to Claims 4 to 6,
   **characterized in that**
   the assignment to a class (23, 24, 25) is carried out as a function of the intensity (y), accumulated over the cycles, of the object (18) with at least one linear division of a features space of the intensity (y) which is accumulated over the cycles.

8. Method according to one of the preceding claims,
   **characterized in that**
   various road users are **characterized by** the various classes (23, 24, 25).

9. Method according to Claim 8,
   **characterized in that**
   a motor cycle and/or a passenger car and/or a lorry and/or a pedestrian and/or a bicycle are taken into account as road users.

10. Method according to one of the preceding claims,
    **characterized in that**
    a trust value which describes a reliability level of the comparison is taken into account as a function of step g).

11. Method according to one of the preceding claims,
    **characterized in that**
    the at least one feature ($V_{abs}$, $A_{abs}$, $\sigma^2 V$, $\sigma^2 A$, y, RC) is weighted.

12. Method according to one of the preceding claims,
    **characterized in that**
    step f) is carried out with a prediction algorithm, in particular a Kalman filter.

13. Driver assistance system (2) having at least one radar sensor (3) for making available radar data of a surrounding area (4) of a motor vehicle (1), wherein the driver assistance system is designed to carry out a method according to one of the preceding claims.

14. Motor vehicle (1) having a driver assistance system (2) according to Claim 13.

## Revendications

1. Procédé de classification d'un objet (18) dans une zone environnante (4) d'un véhicule automobile (1), comprenant les étapes suivantes :

   a) émission de signaux radar (5) dans la zone environnante (4) d'au moins un capteur radar (3) côté véhicule automobile et réception de signaux radar (6) réfléchis sur l'objet (18),
   b) fourniture des informations obtenues par les signaux radar (5, 6) en tant que données radar,
   c) génération d'un spectre de puissance (11) en fonction d'au moins une valeur de distance (13), d'une valeur de vitesse (14) et d'une valeur d'intensité (12) contenue en tant qu'information dans les données radar,
   d) comparaison d'au moins une plage spectrale (15) contenue dans le spectre de puissance (11) avec une valeur de seuil d'intensité et sélection de la plage spectrale (15) en tant qu'objet potentiel (16) dans le cas où son intensité (12) est supérieure à la valeur de seuil d'intensité,
   e) accomplissement d'un cycle supplémentaire avec les étapes a) à d),
   f) reconnaissance de l'objet potentiel (16) en tant qu'objet (18) réel en fonction du fait que l'objet potentiel (16) a été sélectionné à la fois dans un premier cycle selon les étapes a) à d) et aussi au moins dans le deuxième cycle selon l'étape e),

g) comparaison d'au moins une caractéristique ($V_{abs}$, $A_{abs}$, $\sigma^2V$, $\sigma^2A$, y, RC) de l'objet (18) reconnu avec des caractéristiques de référence ($V_{abs}$, $A_{abs}$, $\sigma^2v$, $\sigma^2A$, y, RC) d'un objet de référence,

h) affectation de l'objet (18) à une classe donnée (23, 24, 25) de plusieurs classes (23, 24, 25) différentes en fonction de la comparaison selon l'étape g),

**caractérisé en ce que**
l'au moins une caractéristique de l'objet (18) reconnu prise en compte est une plage d'intensité (RC) de l'objet (18) du spectre de puissance (11), la plage d'intensité (RC) de l'objet (18) dans le spectre de puissance (11) comprenant plusieurs plages spectrales (15) et la plage d'intensité (RC) de l'objet (18) du spectre de puissance (11) étant prise en compte en fonction d'un secteur rectangulaire (20) du spectre de puissance (11), les signaux radar (5, 6) réfléchis de l'objet (18) se répartissant sur plusieurs plages spectrales (15) du spectre de puissance (11) et s'étendant sur plusieurs plages spectrales (15) dans la direction d'un axe de la valeur de distance (13) et sur plusieurs plages spectrales (15) dans la direction d'un axe de la valeur de vitesse (14).

2. Procédé selon la revendication 1, **caractérisé en ce que** dans le premier cycle, après la sélection de l'objet potentiel (16), une détermination d'au moins une valeur de paramètre (13, 14, 17) qui caractérise la plage spectrale (15) est effectuée et dans le deuxième cycle, après la sélection de l'objet potentiel (16), une détermination d'au moins une valeur de paramètre (13, 14, 17) qui caractérise la plage spectrale (15) est également effectuée et la reconnaissance de l'objet potentiel (16) en tant qu'objet (18) réel selon l'étape f) est effectuée indépendamment du fait que les valeurs de paramètre (13, 14, 17) sont apparues dans les deux cycles au moins au sein d'un intervalle d'écart définissant une plage de valeurs des valeurs de paramètre.

3. Procédé selon la revendication 2, **caractérisé en ce que** la valeur de paramètre (13, 14, 17) prise en compte est une valeur de distance (13) entre le capteur radar (3) et l'objet (16) et/ou une vitesse relative (14) entre le capteur radar (3) et l'objet (16) et/ou un angle d'azimut (17) du capteur radar (3) par rapport à l'objet (16) .

4. Procédé selon l'une des revendications précédentes, **caractérisé en ce que** l'au moins une caractéristique ($V_{abs}$, $A_{abs}$, $\sigma^2v$, $\sigma^2A$, y, RC) prise en compte est une vitesse absolue ($V_{abs}$) de l'objet (18) et/ou une accélération absolue ($V_{abs}$) de l'objet (18) et/ou une variance de la vitesse ($\sigma^2V$) de l'objet (18) et/ou une variance de l'accélération ($\sigma^2A$) de l'objet (18) et/ou une intensité (y) de l'objet (18) cumulée sur les cycles.

5. Procédé selon l'une des revendication 4, **caractérisé en ce que** le calcul de la vitesse absolue ($V_{abs}$) de l'objet (18) ou de l'accélération absolue ($A_{abs}$) de l'objet (18) est effectué en fonction d'une vitesse du véhicule automobile (1) ou d'une accélération du véhicule automobile (1) .

6. Procédé selon la revendication 4, **caractérisé en ce qu'**un filtre moyen, qui forme la moyenne de l'intensité (12) sur les cycles, est pris en compte pour l'intensité (y) de l'objet (18) cumulée sur les cycles.

7. Procédé selon les revendications 4 à 6, **caractérisé en ce que** l'affectation à une classe (23, 24, 25) est effectuée en fonction de l'intensité (y) de l'objet (18) cumulée sur les cycles avec au moins une division linéaire d'un espace de caractéristique de l'intensité (y) cumulée sur les cycles.

8. Procédé selon l'une des revendications précédentes, **caractérisé en ce que** différents acteurs du trafic sont **caractérisés par** les différentes classes (23, 24, 25).

9. Procédé selon la revendication 8, **caractérisé en ce qu'**une motocyclette et/ou une voiture de tourisme et/ou un poids lourd et/ou un piéton et/ou une bicyclette est pris en compte comme acteur du trafic.

10. Procédé selon l'une des revendications précédentes, **caractérisé en ce qu'**une valeur de confiance qui décrit une fiabilité de la comparaison est prise en compte en fonction de l'étape g).

11. Procédé selon l'une des revendications précédentes, **caractérisé en ce que** l'au moins une caractéristique ($V_{abs}$, $A_{abs}$, $\sigma^2v$, $\sigma^2A$, y, RC) est pondérée.

12. Procédé selon l'une des revendications précédentes, **caractérisé en ce que** l'étape d) est exécutée avec un algorithme de prédiction, notamment un filtre de Kalman.

13. Système d'assistance au conducteur (2) comprenant au moins un capteur radar (3) destiné à fournir des données radar d'une zone environnante (4) d'un véhicule automobile (1), le système d'assistance au conducteur étant conçu pour mettre en œuvre un procédé selon l'une des revendications précédentes.

14. Véhicule automobile (1) comprenant un système d'assistance au conducteur (2) selon la revendication 13.

Fig.1

Fig.2

Fig.3

**Fig.4**

**Fig.5**

Fig.6

Fig.7

Fig.8

Fig.9

Fig.10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120119894 A1
- US 8314732 B2
- US 7652617 B2
- DE 102011121560 A1